(19) Europäisches Patentamt
European Patent Office
Office européen des brevets

(11) **EP 4 422 929 B1**

(12) **EUROPÄISCHE PATENTSCHRIFT**

(45) Veröffentlichungstag und Bekanntmachung des Hinweises auf die Patenterteilung:
**14.05.2025  Patentblatt 2025/20**

(21) Anmeldenummer: **22809420.7**

(22) Anmeldetag: **26.10.2022**

(51) Internationale Patentklassifikation (IPC):
**B60R 16/023** *(2006.01)*    **B60C 23/04** *(2006.01)*

(52) Gemeinsame Patentklassifikation (CPC):
**B60R 16/0232; B60C 23/0416**

(86) Internationale Anmeldenummer:
**PCT/EP2022/079958**

(87) Internationale Veröffentlichungsnummer:
**WO 2023/073035 (04.05.2023 Gazette 2023/18)**

(54) **SYSTEM ZUR IDENTIFIKATION ZUMINDEST EINER SENSORVORRICHTUNG**

SYSTEM FOR IDENTIFYING AT LEAST ONE SENSOR DEVICE

SYSTÈME PERMETTANT L'IDENTIFICATION D'AU MOINS UN DISPOSITIF CAPTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **27.10.2021   DE 102021128020**

(43) Veröffentlichungstag der Anmeldung:
**04.09.2024   Patentblatt 2024/36**

(73) Patentinhaber: **SAF-HOLLAND GmbH**
**63856 Bessenbach (DE)**

(72) Erfinder:
• **SCHÄFERS, Simon**
 **61130 Nidderau-Erbstadt (DE)**
• **MÜLLER, Daniel**
 **63741 Aschaffenburg (DE)**

(74) Vertreter: **Müller Schupfner & Partner**
**Patent- und Rechtsanwaltspartnerschaft mbB (Muc)**
**Bavariaring 11**
**80336 München (DE)**

(56) Entgegenhaltungen:
**EP-B1- 3 439 920         DE-A1- 102016 118 641**
**DE-A1- 102020 202 029    JP-A- 2008 168 814**
**US-A1- 2020 124 697**

**Beschreibung**

Die Erfindung betrifft ein System zur Identifikation zumindest einer Sensorvorrichtung in oder an einem Fahrzeug, ein Fahrzeug, insbesondere Nutzfahrzeug und/oder Anhänger, umfassend ein solches System sowie ein Verfahren zur Identifikation zumindest einer Sensorvorrichtung in oder an einem Fahrzeug.

Es ist im Stand der Technik bekannt, verschiedene Betriebs- und Zustandsgrößen an Fahrzeugen automatisch mit Sensoren zu erfassen und zu kontrollieren. Dabei werden die Daten von den Sensoren erfasst und beispielsweise an eine Auswerteeinheit oder ein zentrales System übermittelt. Gerade, wenn mehrere Messstellen bzw. mehrere Sensoren an unterschiedlichen Positionen vorgesehen sind, stellt sich jedoch die Frage, wie diese Sensoren effizient und möglichst fehlerfrei ihr Signal an das zentrale System übermitteln können. Dabei kann es wünschenswert sein, nicht nur das Messsignal zu ermitteln und zu übermitteln, sondern auch die Messstelle bzw. die genaue Position, z.B. die Achse, das Rad, oder die Bremsscheibe, an der der Sensor eine Betriebs- und/oder Zustandsgröße ermittelt hat, zu registrieren. Damit kann beispielsweise dem Fahrer oder einem Techniker angezeigt werden, an welcher Stelle ein Problem aufgetreten ist.

Die DE 10 2020 202029 A1 offenbart ein Verfahren zum Identifizieren von an Fahrzeugrädern eines Fahrzeugs angeordneten elektronischen Radeinheiten. Dabei wird eine kumulierte Anzahl an Umdrehungen jedes der Fahrzeugräder unter Verwendung der Radeinheiten erfasst und miteinander verglichen, um Radeinheiten als drehfest miteinander verbunden zu identifizieren, welche annährend übereinstimmende kumulierten Anzahl an Umdrehungen aufweisen.

Die JP 2008 168814 A beschreibt das Verwenden von IC-Tags nahe von Rädern um mittels eines Tag-Readers eine Montageposition zu erhalten und zusammen mit einem gemessenen Luftdruck zu übermitteln.

Die US 2020/0124697 A1 beschreibt ein Gerät zum Bestimmen einer Position einer elektronischen Einheit, wobei mittels Timern ein Zeitpunkt einer Spannungsversorgung ermittelt wird, wobei die Messung der Spannung eine Position der jeweiligen Einheit repräsentiert.

Die EP 3 439 920 B1 beschreibt ein Verfahren zum Bestimmen einer Montageposition von verschiedenen Kameras, indem bestimmte Marker detektiert werden.

Die DE 10 2016 118 641 A1 beschreibt eine Vorrichtung zur Positionsbestimmung einer mobilen Zugangseinrichtung gegenüber einem Kraftfahrzeug. Dabei erfassen Module eine Signalstärke einer Übertragung und führen eine Positionsbestimmung anhand von mehreren Signalstärken verschiedener Module durch.

Im Stand der Technik ist es beispielsweise üblich, eine Identifikation der Sensoren zu ermöglichen, indem eine direkte Kabelverbindung zwischen einem zentralen System und dem jeweiligen Sensor errichtet wird. Auch das Einrichten einer Stern-Topologie, insbesondere mit einer zentralen Hub-Einheit zum Auswerten und/oder Weiterleiten der Daten, ist eine mögliche Variante.

Hierbei kann es jedoch leicht zu Verwechslungen kommen, wenn beispielsweise beim Einbau die Position zweier Sensoren vertauscht wird. Dies kann z.B. vorkommen, wenn die Position bei Auslieferung des Sensors noch nicht bekannt bzw. noch nicht fest vorbestimmt ist und/oder wenn eine Montageposition variieren kann, insbesondere aufgrund mehrerer gleichwertiger Einbaupositionen. Weiterhin kann ein Verlegen der Leitungen für jeden einzelnen Sensor bei einer großen Anzahl vorgesehener Sensoren zeit- und materialaufwändig sein.

Es ist daher Aufgabe der Erfindung, ein System bereitzustellen, welches eine Identifikation der Positionierung verschiedener Sensoren in einem Fahrzeug zuverlässig und effizient ermöglicht.

Diese Aufgabe wird gelöst mit einem System gemäß Anspruch 1, mit einem Fahrzeug gemäß Anspruch 9 und mit einem Verfahren gemäß Anspruch 12. Weitere Vorteile, Merkmale und vorteilhafte Ausführungsformen der Erfindung ergeben sich aus den Unteransprüchen, der Beschreibung sowie den Figuren und deren Beschreibung.

Gemäß einem ersten Aspekt der Erfindung ist ein System zur Identifikation zumindest einer Sensorvorrichtung, bevorzugt mehrerer Sensorvorrichtungen, insbesondere in oder an einem Fahrzeug, vorgesehen, wobei das System die zumindest eine Sensorvorrichtung zum Erfassen von Messsignalen und zumindest eine Messstelle, bevorzugt eine Vielzahl von Messstellen, umfasst, wobei an der Messstelle oder den Messstellen jeweils zumindest eine der Sensorvorrichtungen positioniert und/oder positionierbar ist, wobei das System eine, insbesondere zentrale, Steuereinheit zum Sammeln und/oder Auswerten von den durch die zumindest eine Sensorvorrichtung erfassten Messsignalen umfasst, wobei die zumindest eine Sensorvorrichtung und/oder die Messstelle dazu konfiguriert ist, ein, insbesondere positionsabhängiges, Identifikationssignal zu erfassen und/oder zu erzeugen und an die, insbesondere zentrale, Steuereinheit weiterzuleiten, wobei die, insbesondere zentrale, Steuereinheit dazu konfiguriert ist, die zumindest eine Sensorvorrichtung und/oder die von der zumindest einen Sensorvorrichtung erfassten Messsignale anhand des Identifikationssignals der jeweiligen Messstelle zuzuordnen. Das Fahrzeug kann vorzugsweise ein Nutzfahrzeug sein, bevorzugt mit einem zulässigen Gesamtgewicht von über 3,5 t, besonders bevorzugt über 7,5 t und ganz besonders bevorzugt über 18 t. Das Fahrzeug ist insbesondere ein stra-ßentaugliches und/oder ein straßengebundenes Fahrzeug. Die Sensorvorrichtung kann vorzugsweise dazu konfiguriert sein, Betriebs- und/oder Zustandsgrößen des Fahrzeugs und/oder von Komponenten des Fahrzeugs, insbesondere in Form von Messsignalen, zu erfassen. Erfasste Komponenten des Fahrzeugs können beispielsweise ein Rad, ein Reifen, eine Fahrzeugachse, eine Bremse, insbesondere Scheibenbremse, und/oder Teile davon sein. Messignale können beispielsweise eine Temperatur, eine Spannung und/oder ein Druck, insbesondere Luftdruck, sein. Die Sensorvorrichtung kann beispielsweise einen Temperatursensor, einen Drucksensor, einen Spannungssensor, einen akustischen Sensor und/oder einen optischen Sensor umfassen oder durch einen derartigen Sensor ausgebildet sein. Beispielsweise kann die Sensorvorrichtung dazu konfiguriert sein, die Temperatur einer Scheibenbremse und/oder den Luftdruck eines Reifens zu erfassen. Die Identifikation der Sensorvorrichtung kann insbesondere eine örtliche bzw. lokale Identifikation sein. Insbesondere kann die Identifikation der Sensorvorrichtung eine lokale, vorzugsweise relative, Position, insbesondere innerhalb des Fahrzeugs, und/oder eine Zuordnung der Sensorvorrichtung zu einem möglichen Installationsort und/oder zu einer Messstelle umfassen. Alternativ oder zusätzlich bevorzugt kann die Identifikation auch eine eindeutige Zuordnung, insbesondere eine Seriennummer, für den Sensor bzw. die Sensorvorrichtung umfassen oder durch eine solche Information ausgebildet sein. Die Messstelle kann eine, insbesondere vorbestimmte, Position sein, an der die Sensorvorrichtung angeordnet bzw. positioniert ist und/oder angeordnet bzw. positioniert werden kann und/oder soll. Die Messstelle kann beispielsweise Befestigungsmittel zu Befestigung der Sensorvorrichtung und/oder Anschlüsse, z.B. Datenanschlüsse und/oder Stromversorgungsanschlüsse, für die Sensorvorrichtung umfassen. Beispielsweise kann die Sensorvorrichtung in die Messstelle einsteckbar, anklippbar und/oder anschraubbar sein. Vorzugsweise sind mehrere Messstellen vorgesehen, wobei eine Sensorvorrichtung insbesondere an unterschiedlichen, vorzugsweise allen, Messstellen anschließbar ist bzw. mit unterschiedlichen, vorzugsweise allen, Messstellen kompatibel ist. Die Messstelle und/oder die Sensorvorrichtung ist dazu konfiguriert, ein Identifikationssignal, welches insbesondere positionsabhängig sein kann, zu erfassen und/oder zu erzeugen. Beispielsweise kann es sich um ein Ortungssignal handeln, wobei mit dem Ortungssignal insbesondere eine Position der Sensorvorrichtung in dem Fahrzeug bestimmbar sein kann. Das Identifikationssignal kann insbesondere Rückschlüsse auf eine Position relativ zu dem Fahrzeug und/oder relativ zu einer Referenzposition in dem Fahrzeug ermöglichen und/oder das Identifikationssignal kann abhängig von der Messstelle oder der Sensorvorrichtung sein. Insbesondere kann das Identifikationssignal daher eine, vorteilhafter Weise unique bzw. eindeutige, ID der Messstelle und/oder der Sensorvorrichtung sein oder umfassen. Die Messstelle und/oder die Sensorvorrichtung ist konfiguriert, dass Identifikationssignal an die Steuereinheit weiterzuleiten. Das System kann Datenleitungen, insbesondere von der Messstelle zu der Steuereinheit, umfassen, welche zur Weiterleitung des Identifikationssignals zu der Steuereinheit konfiguriert sind. Die Weiterleitung kann alternativ oder zusätzlich über eine kabellose Verbindung, z.B. mittels einer Wifi- oder Bluetooth-Verbindung, vorgesehen sein. Es ist denkbar, dass die Sensorvorrichtung zum Erfassen und/oder Erzeugen des Identifikationssignals konfiguriert ist, während die Messstelle zum Weiterleiten des Identifikationssignals an die Steuereinheit konfiguriert ist oder umgekehrt. Alternativ oder zusätzlich kann die Messstelle und/oder die Sensorvorrichtung sowohl für das Erfassen und/oder Erzeugen als auch für das Weiterleiten des Identifikationssignals konfiguriert sein. Das Identifikationssignal kann beispielsweise zusammen mit einem Messsignal übermittelt werden, insbesondere um eine direkte Zuordnung des Messsignals zu dem Identifikationssignal bzw. zu der Messstelle, an der die Sensorvorrichtung positioniert ist, zu ermöglichen. Die Steuereinheit kann vorzugsweise eine Rechnereinheit, einen Datenspeicher und/oder eine Benutzerschnittstelle umfassen. Die Steuereinheit kann dazu konfiguriert sein, die Messsignale zu sammeln, auszuwerten, aufzubereiten und/oder einem Nutzer zu präsentieren. Die Steuereinheit kann insbesondere dazu konfiguriert sein, das Identifikationssignal auszuwerten und anhand der Auswertung zu bestimmen, an welcher Position bzw. an welcher Messstelle die Sensorvorrichtung angeordnet ist. Insbesondere kann die Steuereinheit dazu konfiguriert sein, mehrere Sensorvorrichtungen ihren jeweiligen Messstellen zuzuordnen. Vorteilhafterweise kann somit eine Positionierung der Sensorvorrichtung automatisch identifizierbar sein. Dies kann insbesondere vorteilhaft sein, wenn es mehrere äquivalente Positionen bzw. Messstellen in dem Fahrzeug gibt, an denen die Sensorvorrichtung angeordnet bzw. positioniert werden kann. Insbesondere können somit auch größere Messsysteme, beispielsweise verbunden mit einer Bus-Kommunikation, in dem Fahrzeug umsetzbar sein. Die automatische Erkennung der Position der Sensorvorrichtung kann dabei eine gute Sicherheit bei der eindeutigen Zuordnung von gesendeten Messsignalen zu den jeweiligen Messstellen erreicht werden. Beispielsweise kann damit eine ansonsten unklare Platzierung der Sensorvorrichtung in einem Bus-System bestimmt bzw. erkannt werden.

Vorteilhafterweise kann jede der Messstellen und/oder der Sensorvorrichtungen, insbesondere über eine gemeinsame Leitung oder durch verschiedene Leitungen, informationstechnisch mit der, insbesondere zentralen, Steuereinheit verbunden sein, wobei die, vorzugsweise gemeinsame, Leitung insbesondere zur Übertragung der Messsignale und/oder des Identifikationssignals konfiguriert ist. Die gemeinsame Leitung kann z.B. ein Ringsystem und/oder ein Bussystem sein. Dabei kann auch, z.B. in Form eines Datenbussystems, ein Satz von gleichen, gemeinsamen Leitungen vorgesehen sein, um beispielsweise eine größere Datenmenge übertragen zu können. Die gemeinsame Leitung kann optional auch zur Stromversorgung der Messstellen und/oder der Sensorvorrichtungen konfiguriert sein. Es kann vorgesehen sein, dass das System eine gemeinsame Leitung zum Weiterleiten von Messsignalen und eine weitere gemeinsame Leitung zur Identifikation der Sensorvorrichtungen umfasst. Die gemeinsame Leitung kann insbesondere einen Datenpfad mit einer Breite von 4 Bit bis 32 Bit umfassen. Die gemeinsame Leitung kann optional auch bidirektional ausgebildet sein, d.h. insbesondere dazu konfiguriert sein, dass neben den Mess- und/oder Identifikationssignalen, die zu der Steuereinheit übertragen werden können, Steuersignale von der Steuereinheit an die Sensorvorrichtung übertragbar sind. Die Steuereinheit kann dazu konfiguriert sein, Steuersignale zu erzeugen und, insbesondere über die gemeinsame Leitung, an die Sensorvorrichtung bzw. die Sensorvorrichtungen zu senden. Dies kann beispielsweise ein Signal zum Erfassen und Weiterleiten von Messignalen und/oder eine Anweisung zur, insbesondere lokalen, Identifikation der Sensorvorrichtung sein. Durch Vorsehen einer gemeinsamen Leitung kann Material, Bauraum und/oder Installationsaufwand eingespart werden, insbesondere gegenüber der Verwendung von einzelnen Leitungen für jede der Messstellen bzw. Sensorvorrichtungen. Während es bei einer gemeinsamen Leitung grundsätzlich problematisch sein kann, eine eindeutige Zuordnung der einzelnen Sensorvorrichtungen bzw. der Messignale der Sensorvorrichtungen, insbesondere automatisch, vorzunehmen, kann durch die erfindungsgemäße Identifikation eine eindeutige Zuordnung auch bei einer gemeinsamen Leitung erreicht werden.

Vorteilhafterweise kann/können die zumindest eine Sensorvorrichtung und/oder die zumindest eine Messstelle dazu konfiguriert sein, das Identifikationssignal anhand einer erfassten zeitlichen Differenz und/oder anhand einer Signallaufzeit, insbesondere in Zusammenhang mit einer aktuellen Fahrzeuggeschwindigkeit, zu erzeugen. Vorzugsweise steht die Signallaufzeit bzw. die erfasste zeitliche Differenz in direktem Zusammenhang mit der Position der Messstelle bzw. der an der Messstelle positionierten Sensorvorrichtung. Insbesondere kann die Signallaufzeit bzw. der Zeitpunkt eines erfassten Ereignisses mit der Fahrzeuggeschwindigkeit verknüpft sein, indem beispielsweise ein außerhalb des Fahrzeugs angeordnetes Element als Referenz verwendet wird. Es kann eine Sensoreinheit an der zumindest einen Messstelle und/oder der zumindest einen Sensorvorrichtung angeordnet sein. Die Sensoreinheit kann insbesondere dazu konfiguriert sein, ein Ereignis und/oder ein in ihren Erfassungsbereich gelangendes Objekt zeitlich zugeordnet zu erfassen. Beispielsweise kann die Sensoreinheit dazu konfiguriert sein, in einem eingebauten Zustand, das Überfahren eines Hindernisses und/oder das Passieren eines vorbestimmten Objekts zu erfassen. Die Sensoreinheit kann beispielsweise ein Beschleunigungssensor, ein Signalempfänger oder ein Geräuschsensor sein. Das System kann eine Referenzsensoreinheit umfassen, die insbesondere dazu konfiguriert ist, an einer vorbestimmten Stelle in ein Fahrzeug eingebaut und/oder in dem Fahrzeug angeordnet zu sein. Die Referenzsensoreinheit kann dazu konfiguriert sein, insbesondere analog zu der Sensoreinheit, ein Ereignis und/oder ein in ihren Erfassungsbereich gelangendes Objekt zu erfassen, wobei dieses Erfassen einem Zeitpunkt zugeordnet werden kann. Die Referenzsensoreinheit kann insbesondere analog zu der Sensoreinheit ausgestaltet sein. Die zeitliche Differenz kann eine zeitliche Differenz zwischen je einer Signalerfassung der Referenzsensoreinheit und der Sensoreinheit sein. Beispielsweise können ein Zeitpunkt, zu dem die Referenzsensoreinheit ein Objekt passiert und ein weiterer Zeitpunkt zu dem die Sensoreinheit ein Objekt passiert die zeitliche Differenz bilden. Alternativ oder zusätzlich kann die zeitliche Differenz auch eine Signallaufzeit eines Signals sein, wobei insbesondere eine Signalleitung des Signals von einem Signalsender zu der Sensorvorrichtung bzw. der Messstelle dazu konfiguriert sein kann, dass Signal zu verzögern, insbesondere für jede Messstelle unterschiedlich stark zu verzögern. Somit kann diese Ausführungsform eine mit wenig zusätzlichem Materialaufwand verbundene Möglichkeit einer lokalen Identifikation darstellen.

Erfindungsgemäß ist die zumindest eine Sensorvorrichtung Teil einer Reihenschaltung, wobei die Reihenschaltung insbesondere eine Spannungsquelle umfasst, wobei die zumindest eine Sensorvorrichtung dazu konfiguriert ist, das Identifikationssignal anhand eines über die Reihenschaltung übertragenen Signals, insbesondere Spannungssignals, zu erzeugen. Insbesondere kann die Reihenschaltung mehrere Sensorvorrichtungen umfassen, wobei die Reihenschaltung derart konfiguriert ist, dass das über die Reihenschaltung übertragene Signal an jeder Sensorvorrichtung unterschiedlich ausgeprägt ist. Das Identifikationssignal kann vorzugsweise über eine vorbestimmte Charakteristik, beispielsweise über den Zeitpunkt, an dem das Signal die Sensorvorrichtung erreicht, über eine Amplitude bzw. Größe des Signals, z.B. den Betrag einer Spannung, und/oder über einen Signalverlauf, definiert sein. Vorteilhafterweise kann das System in dieser Ausführungsform dazu konfiguriert sein, durch die Umgebung und/oder die konstruktionstechnischen Gegebenheiten des Fahrzeugs ohnehin vorhandene Einflüsse auf ein Signal auszunutzen, um das Identifikationssignal zu erzeugen bzw. zu ermitteln, z.B. in Form eines Spannungsabfalls bei einem Bus-System.

Vorteilhafterweise kann die Reihenschaltung eine Widerstandsserienschaltung sein, wobei die Widerstandsserienschaltung eine Spannungsquelle zur Erzeugung einer Spannung umfasst, wobei die Sensorvorrichtung dazu konfiguriert ist, das Identifikationssignal anhand einer an der zumindest einen Sensorvorrichtung anliegenden Spannung zu erzeugen, wobei die Widerstandsserienschaltung insbesondere derart ausgebildet ist, dass die anliegende Spannung von der Position der jeweiligen Messstelle abhängig ist. Vorzugsweise ist die Widerstandsserienschaltung unabhängig und/oder getrennt von einer Zuleitung zur Stromversorgung der Sensorvorrichtung ausgebildet. Die Widerstandsserienschaltung kann eine einfach umsetzbare Möglichkeit darstellen, ein, insbesondere in Relation zu anderen Elementen der Reihenschaltung, positionsabhängiges Identifikationssignal zu erzeugen, indem insbesondere die nach jedem Widerstand niedrigere Spannung als Referenz verwendet wird. Das Identifikationssignal kann in dieser Ausführungsform der Betrag einer Spannung sein. Insbesondere kann die Widerstandsserienschaltung mehrere in Serie geschaltete Sensorvorrichtungen und/oder Messstellen umfassen, wobei jede der Sensorvorrichtungen und/oder Messstellen einen elektrischen Widerstand umfasst, der Teil der Widerstandsserienschaltung ist. Es kann vorgesehen sein, dass mit Anschluss der Sensorvorrichtung an die Messstelle, der jeweilige Widerstand der Sensorvorrichtung automatisch in die Widerstandsserienschaltung integriert ist. Besonders bevorzugt kann der Widerstand Teil der Messstelle sein und in jedem Fall Teil der Widerstandsserienschaltung sein, wobei insbesondere eine Spannung hinter dem Widerstand erfasst wird, wenn die Sensorvorrichtung an der Messstelle angeschlossen ist. Die Sensorvorrichtung kann einen Spannungssensor umfassen, der dazu konfiguriert ist, die Spannung der Widerstandsserienschaltung an der Messstelle zu erfassen und insbesondere als Identifikationssignal zu verwenden. Alternativ kann der Spannungssensor auch Teil der Messstelle sein und die Messstelle kann dazu konfiguriert sein, das Identifikationssignal an die Sensorvorrichtung zu senden und/oder das Identifikationssignal, vorteilhafterweise zusammen mit einem Signal, insbesondere Messsignal, der Sensorvorrichtung, an die Steuereinheit weiterzuleiten. Bei dieser Ausführungsform ist die erfasste Spannung insbesondere niedriger, je mehr Widerstände zwischen der Spannungsquelle und der Messstelle angeordnet sind. Folglich ist die erfasste Spannung an jeder Messstelle unterschiedlich und kann dazu verwendet werden, die Position, insbesondere innerhalb der Reihenschaltung, bzw. die Lokation innerhalb der Reihenschaltung der Sensorvorrichtung/en zu bestimmen. Geht man gemäß einer Ausführungsform von einer Anzahl N von Widerständen aus, was insbesondere einer Anzahl N von Messstellen entsprechen kann, so ist die Spannung an einer bestimmten Messstelle von der Anzahl und Größe der Widerstände abhängig, welche in der Serienschaltung vor der Messstelle angeordnet sind. Dabei sind an den Messstellen vorzugsweise Widerstände gleicher Größe vorgesehen, d.h. $R_1=R_2=R_3=...=R_n=R$, wobei R der (immer gleiche) Widerstandswert der einzelnen Widerstände ist. Demzufolge ist die abfallende Spannung an jedem Widerstand gleich groß und eine an einer Messstelle ablesbare Spannung $U_{pos}$ ist direkt proportional zu der Anzahl $N_{pos}$ der weiter vorne in der Widerstandsschaltung angeordneten Messstellen. In Abhängigkeit von der Spannung $U_B$ der Spannungsquelle ergibt sich somit

$$U_{pos} = \frac{U_B \cdot \left(R_{pos+1} + \cdots + R_N\right)}{R_1 + R_2 + \cdots + R_{pos} + \cdots + R_N} = \frac{U_B \cdot \left(N - N_{pos}\right) \cdot R}{N \cdot R},$$

wobei $N_{pos}$ die Anzahl der Widerstände vor der Messstelle und damit auch Indikator für die Position der Messstelle ist und $R_{pos+1}$ der Widerstand nach der aktuellen Messstelle ist. Die Anzahl $N_{pos}$, die insbesondere der Nummer der Messstelle zugeordnet ist, an der die Sensorvorrichtung positioniert ist, und/oder dieser entspricht, lässt sich dann als Basis für das Identifikationssignal bestimmen durch

$$N_{pos} = N - \frac{N \cdot U_{pos}}{U_B}.$$

Das Identifikationssignal kann somit, bei Kenntnis der Anzahl der Messstellen und der Versorgungsspannung $U_B$ der Spannungsquelle durch einfaches Ablesen einer Spannung $U_{pos}$ an der Messstelle, an der die Sensorrichtung platziert ist, ermittelbar sein. Insbesondere für den Fall, dass die Anzahl der Widerstände unbestimmt bzw. abhängig von der Anzahl der Sensorvorrichtungen ist, z.B. weil die Widerstände in den Sensorvorrichtungen verbaut sind, kann die Anzahl der angeschlossenen Sensorvorrichtungen über den Strom $I_B$ in der Widerstandsserienschaltung bestimmt werden, wobei mit $U_B/I_B=N\times R$ insbesondere die Anzahl zu $N=U_B/(I_B\times R)$ berechnet werden kann. Beispielsweise kann die Steuereinheit und/oder die Sensorvorrichtung dazu konfiguriert sein, diese Berechnungen, insbesondere automatisch, auszuführen.

Zusätzlich oder alternativ bevorzugt kann das System, insbesondere an der Messstelle, an der Sensorvorrichtung und/oder an der, insbesondere zentralen, Steuereinheit, einen Digital-Analog-Wandler (D/A-Wandler) und/oder einen Analog-Digital-Wandler (A/D-Wandler) umfassen, wobei der D/A-Wandler und/oder A/D-Wandler insbesondere eine Auflösung in einem Bereich von 4 Bit bis 32 Bit, bevorzugt in einem Bereich von 8 Bit bis 16 Bit, besonders bevorzugt von 12 Bit aufweisen kann. 4 Bit bis 32 Bit können ein guter Wertebereich zur Verarbeitung von Messsignalen sein, insbesondere bei mehreren Sensorvorrichtungen. 8 Bit bis 16 Bit können ein guter Wertebereich sein, um die zur Identifikation benötigte Auflösung zu erreichen. Es hat sich insbesondere gezeigt, dass 12 Bit gut geeignet sind, um eine ausreichende Messgenauigkeit zu erreichen.

Insbesondere kann die Gesamtzahl (N) der Widerstände in der Widerstandsserienschaltung und eine relative Messgenauigkeit ($\delta$) der Spannung in Prozent über die Gleichung $N=100\%/|\delta|$ verknüpft sein. Dabei kann die Anzahl an Widerständen N sein und $|\delta|$ der Gesamtbetrag der Unsicherheit sein. Beträgt die Messungenauigkeit z.B. $\pm25\%$ so ist $|\delta|$ $=|-25\%|+|+25\%|=|50\%|$. In diesem Beispiel könnten demnach N=2 Sensorvorrichtungen unterschieden werden. Dieser Zusammenhang lässt sich darüber erklären, dass die gesamte Spannung der Spannungsquelle (entsprechend 100%) in kleinere Spannungsbeträge (in %), welche zur Identifikation der Sensorvorrichtung gemessen werden, aufgeteilt wird. Dabei sollte $|\delta|$ nicht größer sein als der Spannungsabfall an einem Widerstand (anteilsmäßig in %), um die verschiedenen Spannungssignale noch unterscheiden zu können. Beispielsweise kann eine Messgenauigkeit von $\pm0,05\%$ realisierbar sein. Daraus folgt eine maximale Anzahl von Messstellen von $N=100/|0,05\%+0,05\%|=1000$. Für diese Anzahl kann folglich ein D/A-Wandler bzw. A/D-Wandler mit einer Auflösung von zumindest (log(1000)/log(2)) Bit ≈ 10 Bit verwendet werden. Folglich hat sich ergeben, dass ein 12 Bit-Wandler gut geeignet ist für einen Einsatz in dieser Ausführungsform der Erfindung.

Vorteilhafterweise kann die zumindest eine Sensorvorrichtung dazu konfiguriert sein, einen Zeitpunkt, an dem sie über die Reihenschaltung mit Strom versorgt ist, zu erfassen und basierend auf diesem Zeitpunkt das Identifikationssignal zu erzeugen. Beispielsweise kann über die zur Kommunikation zur Verfügung stehenden Bus-Teilnehmer eines Bussystems auf die Position geschlossen werden, wobei insbesondere die Verdrahtungsreihenfolge ausschlaggebend sein kann. Erfindungsgemäß umfasst die zumindest eine Sensorvorrichtung einen Schaltmechanismus zum Anschließen einer weiteren Sensorvorrichtung an die Reihenschaltung, wobei die zumindest eine Sensorvorrichtung dazu konfiguriert ist, die weitere Sensorvorrichtung von der Reihenschaltung auszuschließen, wenn sie selbst nicht mit Strom versorgt ist, und, sobald sie selbst mit Strom versorgt ist, die weitere Sensorvorrichtung nach einem vorbestimmten Zeitintervall an die Reihenschaltung anzuschließen. Beispielsweise kann eine von mehreren Sensorvorrichtungen dazu konfiguriert sein, einen Zeitpunkt zu registrieren, wenn sie mit Strom versorgt wird, diesen Zeitpunkt insbesondere an die Steuereinheit weiterzuleiten und, vorzugsweise zeitversetzt, einen Schalter zu schließen, wodurch die nächste Sensorvorrichtung an die Stromversorgung angeschlossen wird. Über die zeitliche Differenz kann somit die, insbesondere örtliche, Identifikation bzw. das Identifikationssignal unkompliziert ermittelt werden.

Vorteilhafterweise kann die zumindest eine Sensorvorrichtung ein Identifikationsmittel, insbesondere einen QR-Code und/oder einen Bar-Code, umfassen, wobei die Messstelle eine Erkennungsvorrichtung umfasst und/oder wobei an der Messstelle eine Erkennungsvorrichtung, insbesondere ein QR-Scanner und/oder ein Bar-Scanner, angeordnet ist, wobei die Erkennungsvorrichtung dazu ausgelegt ist, das Identifikationsmittel zu erfassen und/oder zu identifizieren, wobei die Messstelle, die Erkennungsvorrichtung und/oder die Sensorvorrichtung dazu konfiguriert ist, das Identifikationssignal für die zumindest eine Sensorvorrichtung anhand des durch die Erkennungsvorrichtung erfassten oder identifizierten Identifikationsmittels zu erzeugen. Vorteilhafterweise kann die Sensorvorrichtung somit automatisch erkannt werden. Es ist auch eine Kombination mit einer der anderen Ausführungsformen denkbar, z.B. mit der Widerstandsserienschaltung, wobei das System dazu konfiguriert sein kann, automatisch zu erkennen, ob (irgend-)eine Sensorvorrichtung an eine bestimmte Messstelle angeschlossen wird, wobei das System dazu konfiguriert sein kann, mittels der anderen Ausführungsform, z.B. mittels der hierin beschriebenen Widerstandsserienschaltung, die genaue Positionierung jeder einzelnen Messstelle zu bestimmen. Beispielsweise kann per Scan ermittelt werden, welche Messstellen besetzt sind und mittels der Widerstandsserienschaltung kann dann die Reihenfolge der Sensorvorrichtungen unter den besetzten Messstellen ermittelt.

Gemäß einem weiteren Aspekt der Erfindung ist ein Fahrzeug, insbesondere Nutzfahrzeug und/oder Anhänger, vorgesehen; umfassend ein System wie hierin beschrieben, wobei das Fahrzeug insbesondere zumindest eine Fahrzeugachse, vorteilhafterweise umfassend eine Bremsscheibe, und/oder insbesondere ein Fahrzeugrad umfasst, wobei zumindest eine der Messstellen an dem Fahrzeugrad, an der Bremsscheibe und/oder an der Fahrzeugachse des Fahrzeugs angeordnet ist, wobei insbesondere an mehreren Fahrzeugrädern und/oder Fahrzeugachsen jeweils zumindest eine Messstelle angeordnet ist. Alle für das System beschriebenen Vorteile und Merkmale lassen sich analog übertragen auf das Fahrzeug und umgekehrt. Die Sensorvorrichtung kann insbesondere dazu konfiguriert sein, zumindest eine Zustands- und/oder Betriebsgröße des Fahrzeugs, der Fahrzeugachse, der Bremsscheibe und/oder des Fahrzeugrads zu erfassen, beispielsweise indem die Sensorvorrichtung einen Temperatursensor, einen Drucksensor, einen Beschleunigungssensor, einen Schwingungssensor und/oder einen optischen Sensor umfasst.

Vorteilhafterweise kann das Fahrzeug eine Vielzahl von Fahrzeugachsen umfassen, wobei an zumindest zwei Fahrzeugachsen, bevorzugt an der überwiegenden Anzahl von Fahrzeugachsen, und besonders bevorzugt an allen Fahrzeugachsen, zumindest jeweils eine Messstelle angeordnet ist. Mit Vorteil kann somit zum Beispiel jede einzelne Achse, bzw. z.B. die Räder und/oder Bremsscheiben der Achsen, kontrolliert werden, wobei eine eindeutige Zuordnung von Messignalen zu den einzelnen Achsen bzw. Komponenten mit Hilfe des Systems möglich sein kann.

Vorteilhafterweise kann die zumindest eine Sensorvorrichtung dazu ausgelegt sein, zu erfassen, wenn eine ihr zugeordnete Fahrzeugachse ein Hindernis überfährt, und wobei die Sensorvorrichtung oder die Messstelle dazu konfiguriert ist, das Identifikationssignal anhand einer zeitlichen Zuordnung des Überfahrens des Hindernisses zu erzeugen, wobei die zugeordnete Fahrzeugachse insbesondere eine Fahrzeugachse ist, an der die Messstelle der Sensorvorrichtung angeordnet ist oder die der Messstelle der Sensorvorrichtung am nächsten ist. Beispielsweise kann das Hindernis eine Fahrbahnunebenheit, z.B. ein Gullideckel oder ein Schlagloch, sein. Diese Ausführungsform kann den Vorteil haben, dass die Umgebung, bzw. die Eigenschaften der Fahrbahn, insbesondere automatisch, ausgenutzt werden können, um die Positionierung der zumindest einen Sensorvorrichtung zu erfassen. Beispielsweise kann das System dazu konfiguriert sein, eine Fahrzeuggeschwindigkeit zu verwenden, um einen Zusammenhang aus dem Zeitpunkt des Überfahrens mit dem Ort der Sensorvorrichtung herzustellen. Die Sensorvorrichtung kann dazu konfiguriert sein, die Fahrzeuggeschwindigkeit zu registrieren und/oder abzufragen und aus der Fahrzeuggeschwindigkeit und der zeitlichen Zuordnung des Überfahrens des Hindernisses die Position der Sensorvorrichtung zu bestimmen. Insbesondere kann das System an einer festgelegten Position eine Referenzvorrichtung umfassen, wobei die Referenzvorrichtung dazu ausgestaltet ist, zu erfassen, wenn eine ihr zugeordnete Fahrzeugachse ein Hindernis überfährt und diese Information an die, insbesondere zentrale, Steuereinheit zu übermitteln, wobei die, insbesondere zentrale, Steuereinheit dazu konfiguriert sein kann, basierend auf dem Identifikationssignal in Kombination mit der Information der Referenzvorrichtung sowie einer aktuellen Fahrzeuggeschwindigkeit die Position der zumindest einen Sensorvorrichtung zu ermitteln.

Vorteilhafterweise kann/können die Sensorvorrichtung und/oder die Referenzvorrichtung einen Beschleunigungssensor umfassen und dazu konfiguriert sein, ein überfahrenes Hindernis anhand des Beschleunigungssensors zu erfassen. Insbesondere kann der Beschleunigungssensor dazu konfiguriert sein, eine vertikale Beschleunigung, vorzugsweise im Bereich an der Achse, zu erfassen. Alternativ oder zusätzlich kann/können die Sensorvorrichtung und/oder die Referenzvorrichtung einen Schallsensor umfassen und dazu konfiguriert sein, ein überfahrenes Hindernis anhand des beim Überfahren erzeugten Geräusches zu erfassen. Das Geräusch kann beispielsweise ein durch das Überfahren eines Gullideckels und/oder einer anderen Straßenunebenheit erzeugtes Geräusch sein. Mit Hilfe eines Schall- und/oder Beschleunigungssensors kann somit vorteilhafterweise eine automatische Identifikation der Sensorvorrichtung erfolgen. Vorteilhafterweise kann es vorgesehen sein, dass der zur Identifikation verwendete Sensor auch für das Erfassen des Messsignals konfiguriert ist.

Gemäß einem weiteren Aspekt der Erfindung ist ein Verfahren zur lokalen Identifikation zumindest einer Sensorvorrichtung, bevorzugt mehrerer Sensorvorrichtungen, zum Erfassen von Messsignalen in oder an einem Fahrzeug vorgesehen, wobei das Verfahren die folgenden Schritte umfasst:

- Bereitstellen der zumindest einen Sensorvorrichtung an einer von mehreren Messstellen in oder an dem Fahrzeug;
- Erfassen und/oder Erzeugen eines Identifikationssignals durch die Sensorvorrichtung;
- Weiterleiten des Identifikationssignals an eine, insbesondere zentrale, Steuereinheit;
- Zuordnen der zumindest einen Sensorvorrichtung und/oder der von der zumindest einen Sensorvorrichtung erfassten Messignale zu der jeweiligen Messstelle anhand des Identifikationssignals durch die, insbesondere zentrale, Steuereinheit.

Alle für das System und das Fahrzeug beschriebenen Vorteile und Merkmale lassen sich analog übertragen auf das Verfahren und umgekehrt.

Ein weiterer Aspekt der Erfindung ist eine Sensorvorrichtung, insbesondere eine Sensorvorrichtung wie hierin beschrieben, die insbesondere dazu konfiguriert ist, in einem System wie hierin beschrieben, eingesetzt zu werden. Alle für das System und das Fahrzeug beschriebenen Vorteile und Merkmale lassen sich analog übertragen auf die Sensorvorrichtung und umgekehrt.

Weitere Vorteile und Merkmale der Erfindung ergeben sich aus der nachfolgenden Beschreibung bevorzugter Ausführungsformen der Erfindung mit Bezug auf die beigefügten Figuren. Hierbei sind einzelne Merkmale verschiedener Ausführungsformen zu neuen Ausführungsformen kombinierbar. Es zeigen

Fig. 1 eine schematische Darstellung einer ersten Ausführungsform eines erfindungsgemäßen Systems,

Fig. 2 eine Schaltskizze einer Widerstandsserienschaltung gemäß einer Ausführungsform der Erfindung,

Fig. 3 eine schematische Darstellung einer weiteren Ausführungsform eines erfindungsgemäßen Systems,

Fig. 4 eine schematische Darstellung einer zusätzlichen Ausführungsform eines erfindungsgemäßen Systems,

Fig. 5 eine schematische Darstellung einer weiteren Ausführungsform eines erfindungsgemäßen Systems,

Fig. 6 eine Schaltskizze einer Reihenschaltung mit Schaltern gemäß der vierten Ausführungsform der Erfindung,

Fig. 7 eine schematische Darstellung eines Verfahrens gemäß einer Ausführungsform der Erfindung und

Fig. 8 eine schematische Darstellung eines Fahrzeugs gemäß einer Ausführungsform der Erfindung.

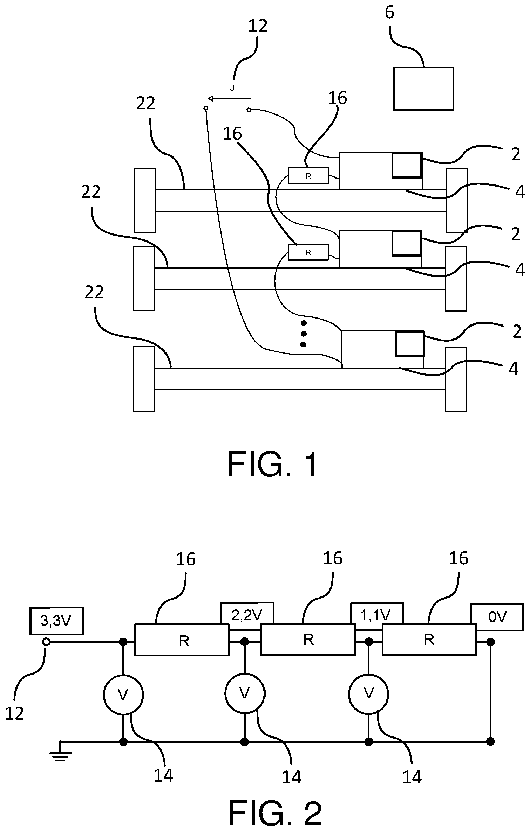

**Figur 1** zeigt eine schematische Darstellung einer Ausführungsform eines erfindungsgemäßen Systems, welches teilweise und/oder vollständig auf Fahrzeugachsen 22 eines Fahrzeugs 20 installiert ist. Das System umfassts mehrere Sensorvorrichtungen 2, welche an Messstellen 4 an den Fahrzeugachsen 22 positioniert sind, wobei grundlegend bei dieser oder allen Ausführungsformen der Erfindung die Sensorvorrichtungen 2 jeweils an Messstellen 4 angeordnet sein können, vorteilhafterweise kann dabei jeweils zumindest eine Sensorvorrichtung 2 an jeweils einer Messstelle 4 positioniert bzw. angeordnet sein. Die Sensorvorrichtungen 2 sind über eine gemeinsame Leitung (nicht gezeigt) mit einer Steuereinheit 6 verbunden, worüber sie Messsignale und Identifikationssignale an die Steuereinheit 6 übertragen können. Diese Steuereinheit 6 kann dabei eine zentrale Steuereinheit sein.

In dieser Ausführungsform umfasst das System weiterhin eine Widerstandsserienschaltung mit mehreren Widerständen 16. Über die Widerstandsserienschaltung sind die Sensorvorrichtungen 2 in Reihe geschaltet, wobei zwischen je zwei Sensorvorrichtungen 2 jeweils ein Widerstand 16 angeordnet ist. Eine Schaltskizze dieses Prinzips ist in **Figur 2** gezeigt. In diesem Beispiel versorgt eine Spannungsquelle 12 oder eine Energiequelle die Serienschaltung mit einer Spannung von 3,3 V, wobei jedoch auch andere Spannungswerte denkbar sind.

An jeder Sensorvorrichtung 2 befindet sich ein Spannungssensor 14 in Form eines Voltmeters womit die Spannung an der jeweiligen Sensorvorrichtung 2 gemessen werden kann. Zwischen zwei Sensorvorrichtungen 2 ist jeweils ein Widerstand 16 angeordnet, wodurch die gemessene Spannung an der jeweils nächsten Sensorvorrichtung 2 niedriger ist, in diesem Fall um 1,1 V niedriger ist. An der ersten Sensorvorrichtung 2 wird demnach in diesem Fall eine Spannung von 3,3 V gemessen, an der zweiten Sensorvorrichtung 2 wird eine Spannung von 2,2 V gemessen und an der dritten Sensorvorrichtung 2 wird eine Spannung von 1,1 V gemessen. Anhand der gemessenen Spannungswerte kann jede Sensorvorrichtung 2 ihrer jeweiligen Position bzw. Messstelle, insbesondere eindeutig, zugeordnet werden.

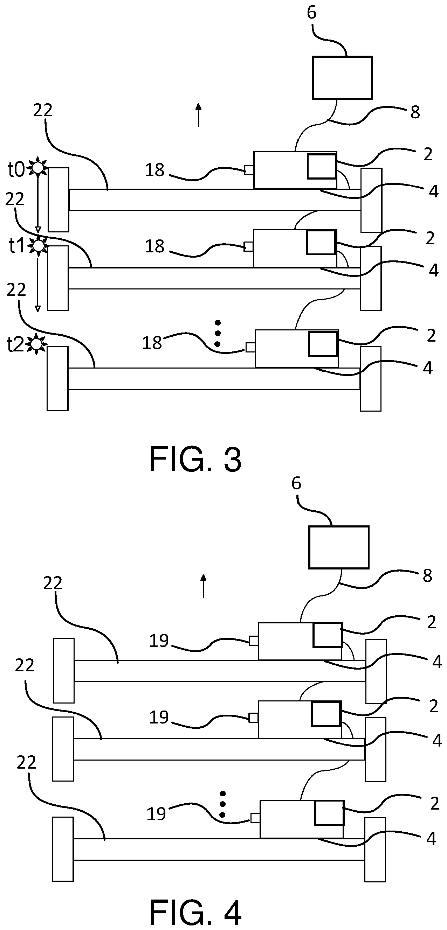

**Figur 3** zeigt eine schematische Darstellung einer weiteren Ausführungsform eines erfindungsgemäßen Systems, welches - zumindest teilweise - auf Fahrzeugachsen 22 eines Fahrzeugs 20 installiert sein kann. Auch in dieser Ausführungsform sind die Sensorvorrichtungen 2 an Messstellen 4 positioniert und mittels einer gemeinsamen Leitung 8 in Kontakt mit der Steuereinheit 6. Eine Identifikation der Sensorvorrichtungen 2 erfolgt jedoch in diesem Fall mit Hilfe von Beschleunigungssensoren 18, welche an den Sensorvorrichtungen 2 angeordnet sind und/oder Teil der jeweiligen Sensorvorrichtung 2 sein können. Überfahren die einzelnen Fahrzeugachsen 22 ein Hindernis, so wird dies von den Beschleunigungssensoren 18 registriert. Der Zeitpunkt, an dem die Fahrzeugachsen 22 jeweils das Hindernis überfahren, wird dann von der Sensorvorrichtung 2 und/oder der jeweiligen Messstelle 4 registriert und an die Steuereinheit 6 weitergeleitet. Abhängig von der Fahrzeuggeschwindigkeit wird sich dieser Zeitpunkt für jede der Fahrzeugachsen unterscheiden, wobei die erste Fahrzeugachse zu einem Zeitpunkt t0, die zweite Fahrzeugachse zu einem Zeitpunkt t1 und die letzte Fahrzeugachse zu einem Zeitpunkt t2 das Hindernis überfährt. Aufgrund der registrierten Fahrzeiten und insbesondere unter Berücksichtigung der Fahrzeuggeschwindigkeit kann somit die Position bzw. Messstelle der jeweiligen Sensorvorrichtungen 2 ermittelt werden.

**Figur 4** zeigt eine schematische Darstellung einer weiteren Ausführungsform eines erfindungsgemäßen Systems, welches auf Fahrzeugachsen 22 eines Fahrzeugs 20 installiert sein kann. In dieser Ausführungsform weist jede der Messstellen 4 jeweils eine Erkennungsvorrichtung 19, insbesondere einen QR-Code-Scanner, auf, welcher dazu konfiguriert ist, einen QR-Code an einer an der Messstelle 4 positionierten Sensorvorrichtung 2 zu erfassen und an die Steuereinheit 6 weiterzuleiten. Bei Einbau der Sensorvorrichtung 2 kann somit sofort ermittelt werden, an welcher Position die Sensorvorrichtung 2 eingebaut wurde.

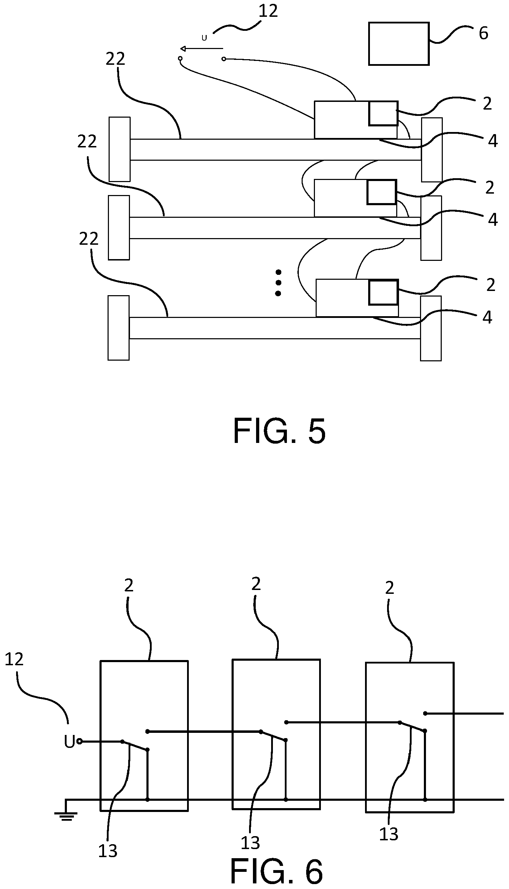

**Figur 5** zeigt eine schematische Darstellung einer weiteren Ausführungsform eines erfindungsgemäßen Systems, welches auf Fahrzeugachsen 22 eines Fahrzeugs 20 installiert ist. In dieser Ausführungsform ist das System dazu konfiguriert, die Position der Sensorvorrichtungen 2 anhand des Zeitpunkts, an dem die Sensorvorrichtungen 2 an einen Stromkreis angeschlossen werden, zu ermitteln. Eine Schaltskizze einer möglichen dafür verwendeten Reihenschaltung ist in **Figur 6** gezeigt. Demnach umfasst jede der Sensorvorrichtungen 2 einen Schalter 13, welcher zunächst so eingerichtet ist, dass er die jeweils nächste Sensorvorrichtung 2 von der Reihenschaltung ausschließt. Sobald die erste Sensorvorrichtung 2 (links im Bild) mit Strom versorgt wird, registriert sie diesen Zeitpunkt und übermittelt den Zeitpunkt als Identifikationssignal an die Steuereinheit 6. Nach einem vorbestimmten Zeitintervall schaltet die Sensorvorrichtung 2 dann den Schalter 13 um und schließt somit die nächste Sensorvorrichtung 2 (hier die mittlere Sensorvorrichtung 2) an den Stromkreis an. Diese registriert ebenfalls den Zeitpunkt, an dem die Stromversorgung einsetzt, und schaltet nach einem entsprechenden vorbestimmten Zeitintervall ebenfalls ihren Schalter 13 um, um damit die nächste Sensorvorrichtung 2 anzuschließen. Dieser Prozess kann solange fortgesetzt werden, bis alle Sensorvorrichtungen 2 angeschlossen sind und den Zeitpunkt ihres Anschlusses registriert haben.

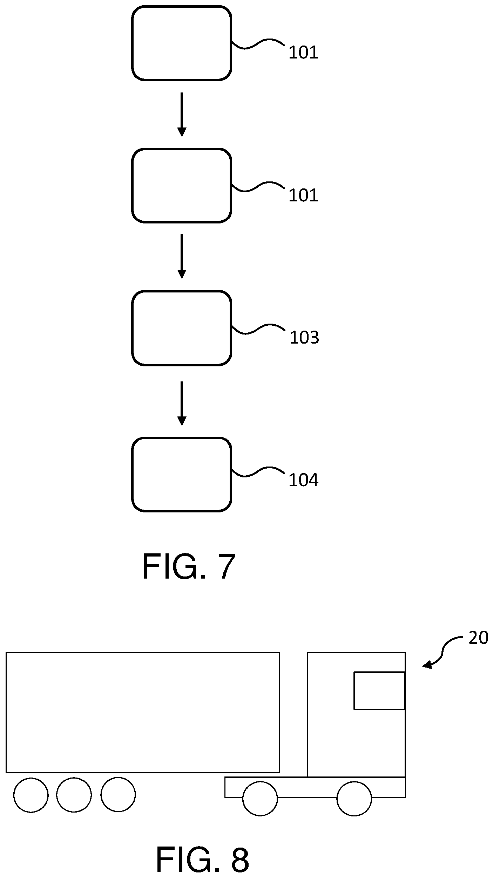

**Figur 7** zeigt eine schematische Darstellung eines Verfahrens gemäß einer Ausführungsform der Erfindung. In einem ersten Schritt 101 werden zunächst mehrere Sensorvorrichtung 2 an Messstellen 4 in oder an einem Fahrzeug 20 bereitgestellt. Dies kann insbesondere durch Installation der Sensorvorrichtungen 2 an den Messstellen 4 des Fahrzeug 20 geschehen. Über die Messstellen 4 und eine gemeinsame Leitung 8 sind die Sensorvorrichtungen 2 mit einer Steuereinheit 6, welche grundlegend eine zentrale Steuereinheit sein kann, verbunden. Dabei können die Sensorvorrichtungen 2 derart ausgebildet sein, dass sie jeweils an verschiedenen Messstellen 4 installiert werden können. Die folgenden Schritte dienen der Identifikation der Sensorvorrichtungen 2 bzw. der automatischen Zuordnung der Sensorvorrichtungen 2 zu der Messstelle 4 an der sie positioniert sind. Dabei wird in einem Schritt 102 zunächst ein Identifikationssignal durch die Sensorvorrichtung 2 erfasst und/oder erzeugt. Dies geschieht insbesondere gemäß einer der hierin beschriebenen Ausführungsformen des erfindungsgemäßen Systems. Beispielsweise kann mittels einer Widerstandsserienschaltung und mit Spannungssensoren 14 eine an den verschiedenen Sensorvorrichtungen 2 jeweils unterschiedliche Spannung als Identifikationssignal festgestellt werden, welches zur Identifikation bzw. örtlichen Zuordnung der Sensorvorrichtungen 2 verwendet werden kann. In einem weiteren Schritt 103 wird das Identifikationssignals an eine, insbesondere zentrale, Steuereinheit 6 weitergeleitet. Schließlich ordnet die Steuereinheit 6 die einzelnen Sensorvorrichtungen 2 bzw. die von den Sensorvorrichtungen 2 erfassten Messignale in einem weiteren Schritt 104 anhand des Identifikationssignals zu ihrer jeweiligen Messstelle 4 bzw. zu ihrer Position zu.

**Figur 8** zeigt eine schematische Darstellung eines Fahrzeugs 20 mit einem System gemäß einer Ausführungsform der Erfindung. In dem Fahrzeug 20 kann beispielsweise eine der Ausführungsformen eines Systems, die in den Figuren 1 bis 7 gezeigt sind, installiert sein.

**Bezugszeichenliste:**

2    Sensorvorrichtung
4    Messstelle
6    Steuereinheit
8    gemeinsame Leitung
12   Spannungsquelle
13   Schalter, Schaltmechanismus
14   Spannungssensor, Voltmeter
16   Widerstand
18   Beschleunigungssensor
19   Identifikationsmittel
20   Fahrzeug
22   Fahrzeugachse

**Patentansprüche**

1.   System zur Identifikation zumindest einer Sensorvorrichtung (2), bevorzugt mehrerer Sensorvorrichtungen (2), in oder an einem Fahrzeug (20),

     wobei das System die zumindest eine Sensorvorrichtung (2) zum Erfassen von Messignalen und zumindest eine Messstelle (4), bevorzugt eine Vielzahl von Messstellen (4), umfasst,
     wobei an der Messstelle (4) oder den Messstellen (4) jeweils zumindest eine der Sensorvorrichtungen (2) positioniert und/oder positionierbar ist,
     wobei das System eine Steuereinheit (6) zum Sammeln und/oder Auswerten von den durch die zumindest eine Sensorvorrichtung (2) erfassten Messignalen umfasst,
     wobei die zumindest eine Sensorvorrichtung (2) und/oder die Messstelle (4) dazu konfiguriert ist, ein, insbesondere positionsabhängiges, Identifikationssignal zu erfassen und/oder zu erzeugen und an die Steuereinheit (6) weiterzuleiten,
     wobei die Steuereinheit (6) dazu konfiguriert ist, die zumindest eine Sensorvorrichtung (2) und/oder die von der zumindest einen Sensorvorrichtung (2) erfassten Messignale anhand des Identifikationssignals der jeweiligen Messstelle (4) zuzuordnen
     wobei die zumindest eine Sensorvorrichtung (2) Teil einer Reihenschaltung ist,
     wobei die Reihenschaltung insbesondere eine Spannungsquelle (12) umfasst,
     wobei die zumindest eine Sensorvorrichtung (2) dazu konfiguriert ist, das Identifikationssignal anhand eines über die Reihenschaltung übertragenen Signals, insbesondere Spannungssignals, zu erzeugen,
     wobei die zumindest eine Sensorvorrichtung (2) dazu konfiguriert ist, einen Zeitpunkt, an dem sie über die Reihenschaltung mit Strom versorgt ist, zu erfassen,
     wobei die zumindest eine Sensorvorrichtung (2) einen Schaltmechanismus (13) zum Anschließen einer weiteren Sensorvorrichtung (2) an die Reihenschaltung umfasst,
     **dadurch gekennzeichnet, dass** die zumindest eine Sensorvorrichtung (2) dazu konfiguriert ist, die weitere Sensorvorrichtung (2) von der Reihenschaltung auszuschließen, wenn sie selbst nicht mit Strom versorgt ist, und, sobald sie selbst mit Strom versorgt ist, die weitere Sensorvorrichtung (2) nach einem vorbestimmten Zeitintervall an die Reihenschaltung anzuschließen.

2.   System gemäß Anspruch 1,

     wobei jede der Messstellen (4) und/oder der Sensorvorrichtungen (2), insbesondere über eine gemeinsame Leitung (8), informationstechnisch mit der Steuereinheit (6) verbunden ist,

wobei die, vorzugsweise gemeinsame, Leitung (8) insbesondere zur Übertragung der Messsignale und/oder des Identifikationssignals konfiguriert ist.

3. System gemäß einem der vorhergehenden Ansprüche,
wobei die zumindest eine Sensorvorrichtung (2) und/oder die zumindest eine Messstelle (4) dazu konfiguriert sind, das Identifikationssignal anhand einer erfassten zeitlichen Differenz und/oder anhand einer Signallaufzeit, insbesondere in Zusammenhang mit einer aktuellen Fahrzeuggeschwindigkeit, zu erzeugen.

4. System gemäß einem der vorhergehenden Ansprüche,

wobei die Reihenschaltung mehrere Sensorvorrichtungen (2) umfasst,
wobei die Reihenschaltung derart konfiguriert ist, dass das über die Reihenschaltung übertragene Signal an jeder Sensorvorrichtung (2) unterschiedlich ausgeprägt ist.

5. System gemäß einem der vorhergehenden Ansprüche, wobei die Reihenschaltung eine Widerstandsserienschaltung ist,

wobei die Widerstandsserienschaltung eine Spannungsquelle (12) zur Erzeugung einer Spannung umfasst,
wobei die Sensorvorrichtung (2) dazu konfiguriert ist, das Identifikationssignal anhand einer an der zumindest einen Sensorvorrichtung (2) anliegenden Spannung zu erzeugen,
wobei die Widerstandsserienschaltung insbesondere derart ausgebildet ist, dass die anliegende Spannung von der Position der jeweiligen Messstelle (4) abhängig ist.

6. System gemäß Anspruch 5,

wobei die Widerstandsserienschaltung mehrere in Serie geschaltete Sensorvorrichtungen (2) umfasst,
wobei jede der Sensorvorrichtungen (2) einen elektrischen Widerstand (16) umfasst, der Teil der Widerstandsserienschaltung ist.

7. System gemäß Anspruch 6,
wobei die Gesamtzahl N der Widerstände (16) in der Widerstandsserienschaltung und eine relative Messgenauigkeit $\delta$ der Spannung in Prozent über die Gleichung $N=100\%/|\delta|$ verknüpft sind.

8. System gemäß einem der vorhergehenden Ansprüche,

wobei die zumindest eine Sensorvorrichtung (2) ein Identifikationsmittel (19), insbesondere einen QR-Code, umfasst,
wobei die Messstelle (4) eine Erkennungsvorrichtung umfasst und/oder
wobei an der Messstelle (4) eine Erkennungsvorrichtung angeordnet ist,
wobei die Erkennungsvorrichtung dazu ausgelegt ist, das Identifikationsmittel (19) zu erfassen und/oder zu identifizieren,
wobei die Messstelle (4), die Erkennungsvorrichtung oder die Sensorvorrichtung (2) dazu konfiguriert ist, das Identifikationssignal für die zumindest eine Sensorvorrichtung (2) anhand des durch die Erkennungsvorrichtung erfassten oder identifizierten Identifikationsmittels (19) zu erzeugen.

9. Fahrzeug (20), insbesondere Nutzfahrzeug und/oder Anhänger, umfassend ein System gemäß einem der vorhergehenden Ansprüche,

wobei das Fahrzeug (20) insbesondere zumindest eine Fahrzeugachse (22), vorteilhafterweise umfassend eine Bremsscheibe, und/oder insbesondere ein Fahrzeugrad umfasst,
wobei zumindest eine der Messstellen (4) an dem Fahrzeugrad, an der Bremsscheibe und/oder an der Fahrzeugachse (22) des Fahrzeugs (20) angeordnet ist,
wobei insbesondere an mehreren Fahrzeugrädern und/oder Fahrzeugachsen (22) jeweils zumindest eine Messstelle (4) angeordnet ist.

10. Fahrzeug (20) gemäß Anspruch 9,

wobei die zumindest eine Sensorvorrichtung (2) dazu ausgelegt ist, zu erfassen, wenn eine ihr zugeordnete Fahrzeugachse (22) ein Hindernis überfährt, und

wobei die Sensorvorrichtung (2) oder die Messstelle (4) dazu konfiguriert ist, das Identifikationssignal anhand einer zeitlichen Zuordnung des Überfahrens des Hindernisses zu erzeugen,

wobei die zugeordnete Fahrzeugachse (22) insbesondere eine Fahrzeugachse (22) ist, an der die Messstelle (4) der Sensorvorrichtung (2) angeordnet ist oder die der Messstelle (4) der Sensorvorrichtung (2) am nächsten ist.

11. Fahrzeug (20) gemäß Anspruch 10,

wobei das System an einer festgelegten Position eine Referenzvorrichtung umfasst, wobei die Referenzvorrichtung dazu ausgestaltet ist, zu erfassen, wenn eine ihr zugeordnete Fahrzeugachse (22) ein Hindernis überfährt und diese Information an die Steuereinheit (6) zu übermitteln,

wobei die Steuereinheit (6) dazu konfiguriert ist, basierend auf dem Identifikationssignal in Kombination mit der Information der Referenzvorrichtung sowie einer aktuellen Fahrzeuggeschwindigkeit die Position der zumindest einen Sensorvorrichtung (2) zu ermitteln.

12. Verfahren zur Identifikation zumindest einer Sensorvorrichtung (2), bevorzugt mehrerer Sensorvorrichtungen (2), zum Erfassen von Messsignalen in oder an einem Fahrzeug (20),
wobei das Verfahren die folgenden Schritte umfasst:

- Bereitstellen der zumindest einen Sensorvorrichtung (2) an einer von mehreren Messstellen (4) in oder an dem Fahrzeug (20), wobei die zumindest eine Sensorvorrichtung (2) Teil einer Reihenschaltung ist;
- Erfassen und/oder Erzeugen eines Identifikationssignals durch die Sensorvorrichtung (2), wobei die Sensorvorrichtung (2) das Identifikationssignal anhand eines über die Reihenschaltung übertragenen Signals, insbesondere Spannungssignals, erzeugt, wobei die Sensorvorrichtung (2) einen Zeitpunkt, an dem sie über die Reihenschaltung mit Strom versorgt ist, erfasst und darauf basierend das Identifikationssignal erzeugt, wobei die zumindest eine Sensorvorrichtung (2) einen Schaltmechanismus (13) zum Anschließen einer weiteren Sensorvorrichtung (2) an die Reihenschaltung umfasst, wobei die zumindest eine Sensorvorrichtung (2) die weitere Sensorvorrichtung (2) von der Reihenschaltung ausschließt, wenn sie selbst nicht mit Strom versorgt ist, und, sobald sie selbst mit Strom versorgt wird, die weitere Sensorvorrichtung (2) nach einem vorbestimmten Zeitintervall an die Reihenschaltung anschließt;
- Weiterleiten des Identifikationssignals an eine Steuereinheit (6);
- Zuordnen der zumindest einen Sensorvorrichtung (2) und/oder der von der zumindest einen Sensorvorrichtung (2) erfassten Messignale zu der jeweiligen Messstelle (4) anhand des Identifikationssignals durch die Steuereinheit (6).

## Claims

1. System for identifying at least one sensor device (2), preferably a plurality of sensor devices (2), in or on a vehicle (20),

wherein the system comprises the at least one sensor device (2) for detecting measurement signals and at least one measuring point (4), preferably a plurality of measuring points (4),

wherein at least one of the sensor devices (2) is positioned and/or positionable at the measuring point (4) or the measuring points (4),

wherein the system comprises a control unit (6) for collecting and/or evaluating the measurement signals detected by the at least one sensor device (2),

wherein the at least one sensor device (2) and/or the measuring point (4) is configured for this purpose, to detect and/or generate an identification signal, in particular a position-dependent identification signal, and to forward it to the control unit (6),

wherein the control unit (6) is configured to assign the at least one sensor device (2) and/or the measurement signals detected by the at least one sensor device (2) to the respective measuring point (4) on the basis of the identification signal,

wherein the at least one sensor device (2) is part of a series circuit,

wherein the series circuit comprises in particular a voltage source (12), wherein the at least one sensor device (2) is configured to generate the identification signal on the basis of a signal, in particular a voltage signal, transmitted via the series circuit,

wherein the at least one sensor device (2) is configured to detect a time at which it is supplied with power via the series circuit,

wherein the at least one sensor device (2) comprises a switching mechanism (13) for connecting a further sensor device (2) to the series circuit, **characterized in that** the at least one sensor device (2) is configured to exclude the further sensor device (2) from the series circuit when it is not itself powered and, once it is itself powered, to connect the further sensor device (2) to the series circuit after a predetermined time interval.

2. System according to claim 1,

   wherein each of the measuring points (4) and/or the sensor devices (2) is connected to the control unit (6) in terms of information technology, in particular via a common line (8),
   wherein the, preferably common, line (8) is configured in particular for transmitting the measurement signals and/or the identification signal.

3. System according to any one of the preceding claims,
   wherein the at least one sensor device (2) and/or the at least one measuring point (4) are configured to generate the identification signal on the basis of a detected time difference and/or on the basis of a signal propagation time, in particular in connection with a current vehicle speed.

4. System according to any one of the preceding claims,
   wherein the series circuit comprises a plurality of sensor devices (2), wherein the series circuit is configured such that the signal transmitted via the series circuit is different at each sensor device (2).

5. System according to any one of the preceding claims, wherein the series circuit is a resistor series circuit,

   wherein the resistor series circuit comprises a voltage source (12) for generating a voltage,
   wherein the sensor device (2) is configured to generate the identification signal on the basis of a voltage applied to the at least one sensor device (2),
   wherein the resistor series circuit is designed in particular such that the applied voltage is dependent on the position of the respective measuring point (4).

6. System according to claim 5,

   wherein the resistor series circuit comprises a plurality of series-connected sensor devices (2),
   wherein each of the sensor devices (2) comprises an electrical resistor (16) forming part of the resistor series circuit.

7. System according to claim 6,
   wherein the total number N of resistors (16) in the resistor series circuit and a relative measurement accuracy $\delta$ of the voltage in percent are linked via the equation $N=100\%/|\delta|$.

8. System according to any one of the preceding claims,

   wherein the at least one sensor device (2) comprises an identification means (19), in particular a QR code,
   wherein the measuring point (4) comprises a recognition device and/or
   wherein a recognition device is arranged at the measuring point (4),
   wherein the recognition device is designed to detect and/or identify the identification means (19),
   wherein the measuring point (4), the recognition device or the sensor device (2) is configured to generate the identification signal for the at least one sensor device (2) on the basis of the identification means (19) detected or identified by the recognition device.

9. Vehicle (20), in particular commercial vehicle and/or trailer, comprising a system according to any one of the preceding claims,

   wherein the vehicle (20) comprises in particular at least one vehicle axle (22), advantageously comprising a brake disk, and/or in particular a vehicle wheel,
   wherein at least one of the measuring points (4) is arranged on the vehicle wheel, on the brake disk and/or on the vehicle axle (22) of the vehicle (20),
   wherein in particular at least one measuring point (4) is arranged in each case on a plurality of vehicle wheels and/or vehicle axles (22).

**10.** Vehicle (20) according to claim 9,

wherein the at least one sensor device (2) is configured to detect when a vehicle axle (22) associated therewith passes over an obstacle, and
wherein the sensor device (2) or the measuring point (4) is configured to generate the identification signal on the basis of a temporal assignment of the passing over of the obstacle,
wherein the assigned vehicle axle (22) is in particular a vehicle axle (22) at which the measuring point (4) of the sensor device (2) is arranged or which is closest to the measuring point (4) of the sensor device (2).

**11.** Vehicle (20) according to claim 10,

wherein the system comprises a reference device at a fixed position, wherein the reference device is designed to detect when a vehicle axle (22) assigned to it passes over an obstacle and to transmit this information to the control unit (6),
wherein the control unit (6) is configured to determine the position of the at least one sensor device (2) based on the identification signal in combination with the information of the reference device and a current vehicle speed.

**12.** Method for identifying at least one sensor device (2), preferably a plurality of sensor devices (2), for detecting measurement signals in or on a vehicle (20), wherein the method comprises the following steps: -

- providing the at least one sensor device (2) at one of a plurality of measuring points (4) in or on the vehicle (20), wherein the at least one sensor device (2) is part of a series circuit;
- detecting and/or generating an identification signal by the sensor device (2), wherein the sensor device (2) generates the identification signal on the basis of a signal, in particular a voltage signal, transmitted via the series circuit, wherein the sensor device (2) detects a point in time at which it is supplied with power via the series circuit and generates the identification signal on the basis thereof, wherein the at least one sensor device (2) comprises a switching mechanism (13) for connecting a further sensor device (2) to the series circuit, wherein the at least one sensor device (2) excludes the further sensor device (2) from the series circuit when it is not itself supplied with power and, as soon as it is itself supplied with power, connects the further sensor device (2) to the series circuit after a predetermined time interval;
- forwarding the identification signal to a control unit (6);
- assigning the at least one sensor device (2) and/or the measurement signals detected by the at least one sensor device (2) to the respective measuring point (4) on the basis of the identification signal by the control unit (6).

**Revendications**

**1.** Système d'identification d'au moins un dispositif capteur (2), de préférence de plusieurs dispositifs capteurs (2), dans ou sur un véhicule (20), le système comprenant ledit au moins un dispositif capteur (2), destiné à saisir des signaux de mesure, et au moins un point de mesure (4), de préférence une pluralité de points de mesure (4),
dans lequel

au moins un des dispositifs capteurs (2) est positionné et/ou peut être positionné respectivement sur le point de mesure (4) ou les points de mesure (4),
le système comprend une unité de commande (6) pour collecter et/ou évaluer les signaux de mesure saisis par ledit au moins un dispositif capteur (2),
ledit au moins un dispositif capteur (2) et/ou le point de mesure (4) est configuré pour saisir et/ou générer un signal d'identification, en particulier dépendant de la position, et pour le transmettre à l'unité de commande (6),
l'unité de commande (6) est configurée pour associer ledit au moins un dispositif capteur (2) et/ou les signaux de mesure saisis par ledit au moins un dispositif capteur (2) au point de mesure (4) respectif en se basant sur le signal d'identification,
ledit au moins un dispositif capteur (2) fait partie d'un circuit en série,
en particulier, le circuit en série comprend une source de tension (12),
ledit au moins un dispositif capteur (2) est configuré pour générer le signal d'identification en se basant sur un signal, en particulier un signal de tension, transmis via le circuit en série,
ledit au moins un dispositif capteur (2) est configuré pour détecter un instant où il est alimenté en courant via le circuit en série,
ledit au moins un dispositif capteur (2) comprend un mécanisme de commutation (13) pour connecter un autre dispositif capteur (2) au circuit en série,
**caractérisé en ce que** ledit au moins un dispositif capteur (2) est configuré pour exclure ledit autre dispositif capteur (2) du circuit en série lorsqu'il n'est pas lui-même alimenté en courant et, dès qu'il est lui-même alimenté en courant, pour connecter ledit autre dispositif capteur (2) au circuit en série après un intervalle de temps prédéterminé.

2. Système selon la revendication 1,

   dans lequel chacun des points de mesure (4) et/ou des dispositifs capteurs (2) est relié informatiquement à l'unité de commande (6), en particulier par une ligne commune (8),
   en particulier, ladite ligne (8), de préférence commune, est configurée pour transmettre les signaux de mesure et/ou le signal d'identification.

3. Système selon l'une des revendications précédentes,
   dans lequel ledit au moins un dispositif capteur (2) et/ou ledit au moins un point de mesure (4) sont configurés pour générer le signal d'identification en se basant sur une différence temporelle détectée et/ou sur un temps de parcours du signal, en particulier en relation avec une vitesse actuelle du véhicule.

4. Système selon l'une des revendications précédentes,

   dans lequel le circuit en série comprend plusieurs dispositifs capteurs (2),
   le circuit en série est configuré de sorte que le signal transmis via le circuit en série soit différent sur chaque dispositif capteur (2).

5. Système selon l'une des revendications précédentes,

   dans lequel le circuit en série est un circuit en série à résistances,
   le circuit en série à résistances comprend une source de tension (12) pour générer une tension,
   le dispositif capteur (2) est configuré pour générer le signal d'identification en se basant sur une tension appliquée audit au moins un dispositif capteur (2),
   en particulier, le circuit en série à résistances est conçu de telle sorte que la tension appliquée dépend de la position du point de mesure (4) respectif.

6. Système selon la revendication 5,

   dans lequel le circuit en série à résistances comprend plusieurs dispositifs capteurs (2) connectés en série,
   chacun des dispositifs capteurs (2) comprend une résistance électrique (16) qui fait partie du circuit en série à résistance.

7. Système selon la revendication 6,
   dans lequel le nombre total N de résistances (16) dans le circuit en série à résistances et une précision de mesure relative $\delta$ de la tension en pourcentage sont liés par l'équation N = 100 % / |$\delta$|.

8. Système selon l'une des revendications précédentes,

   dans lequel ledit au moins un dispositif capteur (2) comprend un moyen d'identification (19), en particulier un code QR,
   le point de mesure (4) comprend un dispositif de reconnaissance, et/ou un dispositif de reconnaissance est disposé au niveau du point de mesure (4),
   le dispositif de reconnaissance est conçu pour détecter et/ou identifier le moyen d'identification (19),
   le point de mesure (4), le dispositif de reconnaissance ou le dispositif capteur (2) sont configuré pour générer le signal d'identification pour ledit au moins un dispositif capteur (2) en se basant sur le moyen d'identification (19) détecté ou identifié par le dispositif de reconnaissance.

9. Véhicule (20), en particulier véhicule utilitaire et/ou remorque, comprenant un système selon l'une des revendications précédentes, dans lequel

   en particulier, le véhicule (20) comprend au moins un essieu de véhicule (22), comprenant avantageusement un disque de frein, et/ou en particulier une roue de véhicule,
au moins un des points de mesure (4) est disposé sur la roue de véhicule, sur le disque de frein et/ou sur l'essieu de véhicule (22) du véhicule (20),
en particulier, au moins un point de mesure (4) respectif est disposé sur plusieurs roues de véhicule et/ou essieux de véhicule (22).

10. Véhicule (20) selon la revendication 9,

dans lequel ledit au moins un dispositif capteur (2) est conçu pour détecter la situation où un essieu de véhicule (22) qui lui est associé franchit un obstacle, et
le dispositif capteur (2) ou le point de mesure (4) est configuré pour générer le signal d'identification en se basant sur une association temporelle du franchissement de l'obstacle,
en particulier, l'essieu de véhicule (22) associé est un essieu de véhicule (22) sur lequel est disposé le point de mesure (4) du dispositif capteur (2) ou qui est le plus proche du point de mesure (4) du dispositif capteur (2).

11. Véhicule (20) selon la revendication 10,

dans lequel le système comprend un dispositif de référence à une position fixée,
le dispositif de référence est conçu pour détecter la situation où un essieu de véhicule (22) qui lui est associé franchit un obstacle et pour transmettre cette information à l'unité de commande (6),
l'unité de commande (6) est configurée pour déterminer la position dudit au moins un dispositif capteur (2) en se basant sur le signal d'identification en combinaison avec l'information du dispositif de référence ainsi qu'avec une vitesse actuelle du véhicule.

12. Procédé d'identification d'au moins un dispositif capteur (2), de préférence de plusieurs dispositifs capteur (2), destiné(s) à saisir des signaux de mesure dans ou sur un véhicule (20),
le procédé comprenant les étapes suivantes consistant à :

- fournir ledit au moins un dispositif capteur (2) au niveau de l'un de plusieurs points de mesure (4) dans ou sur le véhicule (20), ledit au moins un dispositif capteur (2) faisant partie d'un circuit en série ;
- saisir et/ou générer un signal d'identification par le dispositif capteur (2), sachant que le dispositif capteur (2) génère le signal d'identification en se basant sur un signal, en particulier un signal de tension, transmis via le circuit en série, le dispositif capteur (2) détecte un instant où il est alimenté en courant via ledit circuit en série, et génère le signal d'identification en se basant sur cet instant, ledit au moins un dispositif capteur (2) comprend un mécanisme de commutation (13) pour connecter un autre dispositif capteur (2) au circuit en série, ledit au moins un dispositif capteur (2) est configuré pour exclure ledit autre dispositif capteur (2) du circuit en série lorsqu'il n'est pas lui-même alimenté en courant et, dès qu'il est lui-même alimenté en courant, il connecte ledit autre dispositif capteur (2) au circuit en série après un intervalle de temps prédéterminé ;
- transmettre le signal d'identification à une unité de commande (6) ;
- associer, par l'unité de commande (6), ledit au moins un dispositif capteur (2) et/ou les signaux de mesure saisis par ledit au moins un dispositif capteur (2) au point de mesure respectif (4) en se basant sur le signal d'identification.

FIG. 1

FIG. 2

FIG. 3

FIG. 4

FIG. 5

FIG. 6

101

101

103

104

FIG. 7

20

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020202029 A1
- JP 2008168814 A
- US 20200124697 A1
- EP 3439920 B1
- DE 102016118641 A1